# EUROPÄISCHE PATENTSCHRIFT

(11) **EP 3 386 881 B1**
(45) Veröffentlichungstag und Bekanntmachung des Hinweises auf die Patenterteilung: **11.12.2019**
(21) Anmeldenummer: 16794955.1
(22) Anmeldetag: 25.10.2016
(51) Int. Cl.: B65D 51/16, B65D 39/08, F16K 17/19

(54) **SPUNDSTOPFEN MIT INTEGRIERTER DRUCKAUSGLEICHSEINRICHTUNG**
STOPPER WITH INTEGRATED PRESSURE EQUALIZING DEVICE
BONDON À DISPOSITIF D'ÉQUILIBRAGE DE PRESSION INTÉGRÉ

(30) Priorität: 08.12.2015 DE 202015008399 U
(43) Veröffentlichungstag der Anmeldung: 17.10.2018
(73) Patentinhaber: Protechna S.A., 1701 Fribourg (CH)
(72) Erfinder: PREE, Karl-Heinz, 57539 Etzbach (DE)
(74) Vertreter: advotec.
(86) Internationale Anmeldenummer: PCT/EP2016/075603
(87) Internationale Veröffentlichungsnummer: WO 2017/097485

(56) Entgegenhaltungen:
- EP-A1- 0 922 649
- DE-U1- 29 608 342
- DE-U1- 29 608 342

## Beschreibung

Die vorliegende Erfindung betrifft einen Spundstopfen mit integrierter Druckausgleichseinrichtung zur Anordnung in einem Behälterdeckel eines Flüssigkeitsbehälters, wobei der Spundstopfen unterhalb einer Stopfenmulde ein mit Luftdurchtrittsöffnungen versehenes Ventilgehäuse aufweist mit einem zentrisch im Ventilgehäuse angeordneten Aufnahmezapfen zur Anordnung einer mit einer Membrannabe auf dem Aufnahmezapfen angeordneten Ventilmembran, die mit einem radial äußeren Ringrand an einem Ringabsatz des Ventilgehäuses anliegt, wobei die Membrannabe zwischen einem Boden der Stopfenmulde und einer Deckelnabe eines auf dem Aufnahmezapfen angeordneten, mit Luftdurchtrittsöffnungen versehenen Schwalldeckels angeordnet ist, wobei zwischen dem Schwalldeckel und der Ventilmembran eine Schwallscheibe vorgesehen ist.

Ein Spundstopfen der eingangs genannten Art ist aus der EP 0 922 649 A1 bekannt, wobei die Schwallscheibe und der Schwalldeckel als voneinander unabhängige Elemente ausgebildet sind, die bei einer Montage im Ventilgehäuse in definierter Montagereihenfolge in das Ventilgehäuse eingesetzt werden müssen. Dabei ist die Montage des Schwalldeckels im Ventilgehäuse auch unabhängig von einer vorausgehenden Anordnung der Schwallscheibe im Ventilgehäuse möglich, da die Befestigung des Schwalldeckels im Ventilgehäuse unabhängig von der Schwallscheibe über eine Klemmverbindung zwischen dem Schwalldeckel und dem Aufnahmezapfen des Ventilgehäuses erfolgt.

Aus dem Vorstehenden ergibt sich, dass es zum einen leicht möglich ist, dass bei einer Montage des Schwalldeckels die vorhergehende Anordnung der Schwallscheibe im Ventilgehäuse vergessen oder unterlassen wird, so dass die gewünschte Funktion der Druckausgleichseinrichtung nicht gegeben ist.

Darüber hinaus ergibt sich aufgrund der ausschließlich zentralen Befestigung des Schwalldeckels an dem Aufnahmezapfen des Ventilgehäuses die Möglichkeit, dass bei einem Versagen der Klemmverbindung der Schwalldeckel in den Behälterinnenraum fallen kann.

Ausgehend von dem vorliegenden Stand der Technik liegt der Erfindung die Aufgabe zugrunde, einen Spundstopfen mit integrierter Druckausgleichseinrichtung vorzuschlagen, der durch seine Konstruktion eine funktionssichere Montage des Spundstopfens ermöglicht und der eine erhöhte Betriebssicherheit aufweist.

Zur Lösung dieser Aufgabe weist der erfindungsgemäße Spundstopfen die Merkmale des Anspruchs 1 auf.

Erfindungsgemäß ist die Schwallscheibe in einem Verbund mit dem Schwalldeckel ausgebildet, und der Schwalldeckel weist zur Befestigung im Ventilgehäuse eine in einem axialen Abstand von der Schwallscheibe angeordnete Befestigungsscheibe auf, die einen äußeren Befestigungsrand zur Ausbildung einer Eingriffsverbindung mit einer an einer Innenseite einer Gehäusewand des Ventilgehäuses angeordneten Befestigungsaufnahme aufweist.

Aufgrund der erfindungsgemäßen Ausgestaltung der Schwallscheibe im Verbund mit dem Schwalldeckel ist die Montage des Schwalldeckels nur zusammen mit der Schwallscheibe möglich, so dass ein Weglassen der Schwallscheibe bei der Montage des Schwalldeckels ausgeschlossen ist.

Aufgrund der Eingriffsverbindung mit der Gehäusewand ist eine sichere Fixierung des Schwalldeckels am Ventilgehäuse gegeben, so dass nicht die Gefahr besteht, dass der Schwalldeckel sich vom Ventilgehäuse beziehungsweise vom Spundstopfen ablöst und in das Behälterinnere fallen kann. Darüber hinaus wird durch die Eingriffsverbindung eine definierte Positionierung des Schwalldeckels am Ventilgehäuse ermöglicht.

Vorzugsweise sind die Befestigungsscheibe und die Schwallscheibe des Schwalldeckels einstückig zusammenhängend miteinander ausgebildet, so dass nicht nur ein Verbund - der insbesondere auch die Ausbildung eine gefügten Verbindung zwischen der Befestigungsscheibe und der Schwallscheibe einschließt - während der Montage besteht, sondern bereits die Herstellung der Befestigungsscheibe und der Schwallscheibe in einem einzigen Herstellungsvorgang erfolgen kann.

Zur Ausbildung der Eingriffsverbindung ist es vorteilhaft, wenn der Befestigungsrand als Rastring und die Befestigungsaufnahme als Rastnut ausgebildet ist.

Bei einer bevorzugten Ausführungsform des Spundstopfens weist der Schwalldeckel zur Ausbildung des axialen Abstands zwischen der Befestigungsscheibe und der Schwallscheibe Distanzstege auf, und die Gehäusewand weist radial benachbart zu den Distanzstegen Luftdurchtrittsöffnungen auf.

Wenn die Schwallscheibe einen äußeren Stützrand zur Abstützung gegenüber einem im Ventilgehäuse ausgebildeten Stützabsatz aufweist, ist durch den Stützabsatz eine Montagehilfe gegeben, derart, dass die Deckelscheibe lediglich mit dem Stützrand der Schwallscheibe gegen den Stützabsatz zu positionieren ist, um eine für einen sicheren Eingriff des Befestigungsrands der Befestigungsscheibe in die Befestigungsaufnahme der Gehäusewand des Ventilgehäuses geeignete Relativpositionierung zwischen dem Schwalldeckel und der Gehäusewand herzustellen.

Besonders vorteilhaft ist es, wenn eine einem Spundstopfenunterrand benachbarte Unterseite der Befestigungsscheibe des Schwalldeckels gegenüber dem Spundstopfenunterrand zurückversetzt oder in derselben Horizontalebene wie der Spundstopfenunterrand angeordnet ist, so dass ein Überstand des Schwalldeckels über den Spundstopfenunterrand vermieden wird und damit eine besonders geschützte Anordnung des Schwalldeckels im Spundstopfen ermöglicht wird.

Nachfolgend wird eine bevorzugte Ausführungsform des Spundstopfens anhand der Zeichnung näher erläutert.

Es zeigen:
- **Fig. 1**: eine Schnittdarstellung eines Spundstopfens;
- **Fig. 2**: eine isometrische Darstellung des in **Fig. 1** dargestellten Spundstopfens unmittelbar vor Montage eines Schwalldeckels im Ventilgehäuse des Spundstopfens;
- **Fig. 3**: eine in der Darstellung **Fig. 2** entsprechende Ansicht des Spundstopfens nach erfolgter Montage des Schwalldeckels im Ventilgehäuse.

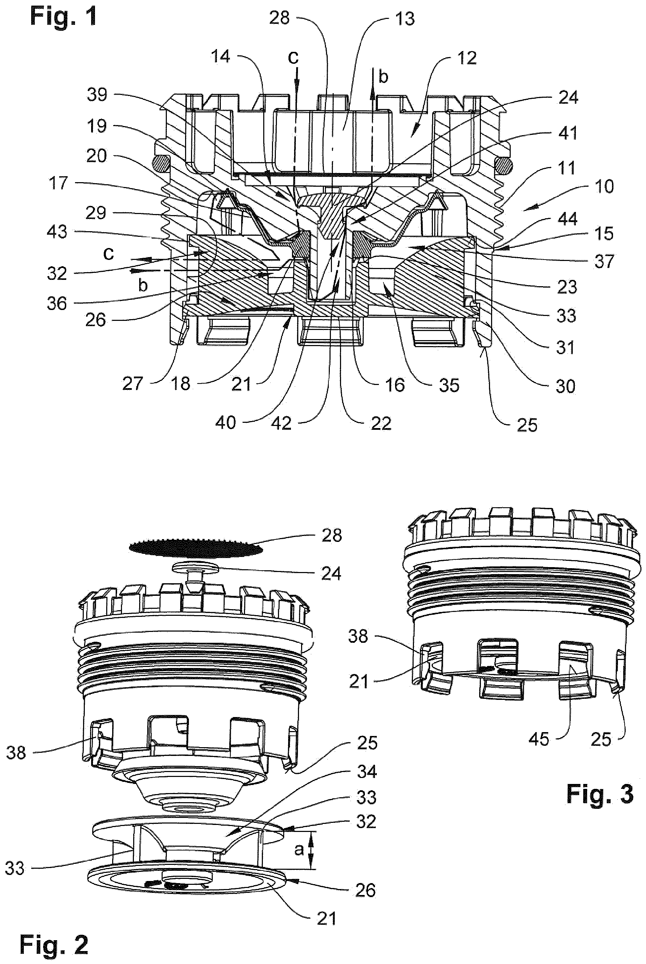

**Fig. 1** zeigt einen Spundstopfen 10, der zur Anordnung in einem nicht dargestellten Behälterdeckel eines Flüssigkeitsbehälters mit einem Außengewinde 11 versehen ist. Der Spundstopfen 10 weist in seinem oberen Teil eine Stopfenmulde 12 auf, die über den Umfang einer Innenwand der Stopfenmulde 12 verteilt angeordnete, radial in die Stopfenmulde 12 hineinragende Werkzeugansätze 13 aufweist, die mit einem geeignet ausgebildeten, in die Stopfenmulde 12 eingreifenden Werkzeug die Übertragung eines Schraubmoments auf den Spundstopfen 10 ermöglichen, um den Spundstopfen 10 in den nicht dargestellten Behälterdeckel einzuschrauben oder aus diesem zu entfernen.

Die Stopfenmulde 12 weist einen Muldenboden 14 auf, der ein im unteren Teil des Spundstopfens 10 ausgebildetes Ventilgehäuse 15 von der Stopfenmulde 12 abtrennt.

Das Ventilgehäuse 15 weist einen zentrisch am Muldenboden 14 angeordneten Aufnahmezapfen 16 auf, der zur Anordnung einer vorzugsweise als Gummimembran ausgeführten Ventilmembran 17 im Ventilgehäuse 15 dient. Die Ventilmembran 17 bildet im Querschnitt ein in **Fig. 1** dargestelltes hutförmiges Profil aus und weist eine Membrannabe 18 zur Anordnung der Ventilmembran 17 auf dem Aufnahmezapfen 16 und einen radial äußeren Ringrand 19 auf, der zur abdichtenden Anlage gegen einen an der Unterseite des Muldenbodens 14 ausgebildeten, einen Ventilsitz bildenden Ringabsatz 20 dient.

Den unteren Abschluss des Ventilgehäuses 15 bildet ein in das Ventilgehäuse 15 eingesetzter Schwalldeckel 21, der mit einer Deckelnabe 22 auf dem Aufnahmezapfen 16 angeordnet ist, derart, dass die Membrannabe 18 der Ventilmembran 17 zwischen einer Unterseite des Muldenbodens 14 und einem Ringrand 23 der Deckelnabe 22 aufgenommen ist.

Wie sich insbesondere aus einer Zusammenschau der **Fig. 1 und 2** ergibt, weist der Schwalldeckel 21 eine benachbart einem Spundstopfenunterrand 25 angeordnete Befestigungsscheibe 26 zur Befestigung des Schwalldeckels 21 an einer Gehäusewand 30 des Ventilgehäuse 15 mittels eines äußeren als Rastring 27 ausgebildeten Befestigungsrands auf, der in eine oberhalb des Spundstopfenunterrands 25 auf einer Innenseite 29 der Gehäusewand 30 als Rastnut 31 ausgebildete Befestigungsaufnahme eingreift.

Im Verbund mit der Befestigungsscheibe 26 weist der Schwalldeckel 21 eine Schwallscheibe 32 auf, wobei im Fall des vorliegend dargestellten Ausführungsbeispiels der Verbund zwischen der Befestigungsscheibe 26 und der Schwallscheibe 32 mittels einer einstückig zusammenhängenden Ausgestaltung der Befestigungsscheibe 26 und der Schwallscheibe 32 realisiert ist. Dabei ist, wie insbesondere **Fig. 2** zeigt, der einstückige Zusammenhang zwischen der Befestigungsscheibe 26 und der Schwallscheibe 32 durch zwischen der Befestigungsscheibe 26 und der Schwallscheibe 32 ausgebildete Distanzstege 33 ermöglicht, die einen axialen Abstand a zwischen der Befestigungsscheibe 26 und der Schwallscheibe 32 definieren.

Zwischen den Distanzstegen 33 sind Stegzwischenräume 34 ausgebildet, die sich radial einwärts bis in einen konzentrisch die Deckelnabe 22 umgebenden, im Schwalldeckel 21 ausgebildeten Ringspalt 35 erstrecken, so dass die Stegzwischenräume 34 mit dem Ringspalt 35 Luftdurchtrittsöffnungen 36 ausbilden, die, wie in **Fig. 1** dargestellt, eine sowohl nach außen als auch nach innen gerichtete radiale Luftströmung b, c durch den Schwalldeckel 21 ermöglichen und somit zusammen mit am Spundstopfenunterrand 25 benachbart den Stegzwischenräumen 34 in der Gehäusewand 30 ausgebildeten Luftdurchtrittsöffnungen 38 einen Luftaustausch zwischen einem Behälterinnenraum und einen im Ventilgehäuse 15 ausgebildeten Ventilraum 37 ermöglichen.

Die Ventilmembran 17 ermöglicht im Zusammenwirken mit den in der Gehäusewandung 30 ausgebildeten Luftdurchtrittsöffnungen 38, den im Schwalldeckel 21 ausgebildeten Luftdurchtrittsöffnungen 36, im Muldenboden 14 ausgebildeten Luftdurchtrittsöffnungen 39 und einer zentralen Luftdurchtrittsöffnung 40 durch einen im Muldenboden 14 ausgebildeten Zapfenboden 41 sowohl eine Belüftung eines Behälterinnenraums als auch eine Entlüftung eines Behälterinnenraums. Im Fall des dargestellten Ausführungsbeispiels ist in der Luftdurchtrittsöfffnung 40 ein Pilzventil 24 angeordnet.

Die Belüftung des Behälterinnenraums erfolgt bei einem im Behälterinnenraum ausgebildeten Unterdruck, wobei infolge des Unterdrucks der Ringrand 19 der Ventilmembran 17 von dem Ringabsatz 20 abhebt und über den in **Fig. 1** angedeuteten Belüftungsweg eine Luftströmung c in den Behälterinnenraum durch die Luftdurchtrittsöffnung 39 im Muldenboden 14, den Ventilraum 37 und die Luftdurchtrittsöffnungen 36 im Schwalldeckel 21 und die Luftdurchtrittsöffnungen 38 in der Gehäusewand 30 bis in den Behälterinnenraum erfolgt. Eine Entlüftung des Behälters erfolgt bei einem gegenüber der Umgebung im Behälterinnenraum ausgebildeten Überdruck, in dessen Folge sich die Membrannabe 18 auf dem Aufnahmezapfen 16 gegen den Muldenboden 14 verschiebt und zwischen einem Ringrand 23 der Deckelnabe 22 und der Membrannabe 18 einen Ringspalt freigibt, durch den eine Entlüftungsströmung b, wie in **Fig. 1** dargestellt, um den Aufnahmezapfen 16, in einen Zapfeninnenraum 42 und durch die im Zapfenboden 41 ausgebildete Durchtrittsöffnung 40 und ein oberhalb des Muldenbodens 14 angeordnetes Schutzgitter 28 schließlich nach außen strömen kann. Im Ergebnis bildet somit die im Ventilgehäuse 15 angeordnete Ventilmembran 17 im Zusammenwirken mit den Luftdurchtrittsöffnungen 36, 38, 39, 40 eine im Spundstopfen 10 integrierte Druckausgleichseinrichtung zur Be- und Entlüftung des Behälterinnenraums.

In dem Fall, dass abweichend von der dargestellten Ausführungsform keine mit einem Pilzventil 24 versehene Luftdurchtrittsöffnung 40 im Muldenboden 14 ausgebildet ist, ist ein Gasaustausch zum Druckausgleich nur in eine Richtung möglich.

Wie insbesondere die **Fig. 1 und 2** zeigen, ist die im vorliegenden Fall zur Ausbildung des Schwalldeckels 21 monolithisch mit der Befestigungsscheibe 26 ausgebildete Schwallscheibe 32 mit einem äußeren Stützrand 43 zur Abstützung gegen einen im Ventilgehäuse 15 des Spundstopfens 10 ausgebildeten Stützabsatz 44 versehen. Die Abstützung der Schwallscheibe 32 gegen den Stützabsatz 44 ermöglicht eine formelastische vorgespannte Montage des Schwalldeckels 21 im Ventilgehäuse 15, wenn der Rastring 27 der Befestigungsscheibe 26 in die Rastnut 31 gefügt wird.

Wie die **Fig. 1 und 3** verdeutlichen, ist der Schwalldeckel 21 so in das Ventilgehäuse 15 des Spundstopfens 10 eingesetzt, dass eine Unterseite 45 der Befestigungsscheibe 26 gegenüber dem Spundstopfenunterrand 25 zurückversetzt angeordnet ist.

## Patentansprüche

1. Spundstopfen (10) mit integrierter Druckausgleichseinrichtung zur Anordnung in einem Behälterdeckel eines Flüssigkeitsbehälters, wobei der Spundstopfen unterhalb einer Stopfenmulde (12) ein mit Luftdurchtrittsöffnungen (38, 39, 40) versehenes Ventilgehäuse (15) aufweist mit einem zentrisch im Ventilgehäuse angeordneten Aufnahmezapfen (16) zur Anordnung einer mit einer Membrannabe (18) auf dem Aufnahmezapfen (16) angeordneten Ventilmembran (17), die mit einem radial äußeren Ringrand (19) an einem Ringabsatz (20) des Ventilgehäuses (15) anliegt, wobei die Membrannabe (18) zwischen einem Muldenboden (14) der Stopfenmulde (12) und einer Deckelnabe (22) eines auf dem Aufnahmezapfen (16) angeordneten, mit Luftdurchtrittsöffnungen (36) versehenen Schwalldeckels (21) angeordnet ist, wobei zwischen dem Schwalldeckel (21) und der Ventilmembran eine Schwallscheibe (32) vorgesehen ist,
**dadurch gekennzeichnet,**
**dass** die Schwallscheibe (32) in einem Verbund mit dem Schwalldeckel (21) ausgebildet ist, und der Schwalldeckel (21) zur Befestigung im Ventilgehäuse (15) eine in einem axialen Abstand (a) von der Schwallscheibe (32) angeordnete Befestigungsscheibe (26) aufweist, die einen äußeren Befestigungsrand (27) zur Ausbildung einer Eingriffsverbindung mit einer an einer Innenseite (29) einer Gehäusewand (30) des Ventilgehäuses (15) angeordneten Befestigungsaufnahme (31) aufweist.

2. Spundstopfen (10) nach Anspruch 1, **dadurch gekennzeichnet,**
**dass** die Befestigungsscheibe (26) und die Schwallscheibe (32) des Schwalldeckels (21) einstückig miteinander zusammenhängend ausgebildet sind.

3. Spundstopfen (10) nach Anspruch 1 oder 2, **dadurch gekennzeichnet,**
**dass** der Befestigungsrand als Rastring (27) und die Befestigungsaufnahme als eine Rastnut (31) ausgebildet ist.

4. Spundstopfen (10) nach einem der vorangehenden Ansprüche, **dadurch gekennzeichnet,**
**dass** der Schwalldeckel (21) zur Ausbildung des axialen Abstands (a) zwischen der Befestigungsscheibe (26) und der Schwallscheibe (32) Distanzstege (33) aufweist, und die Gehäusewand (30) des Ventilgehäuses (15) radial benachbart zu Stegzwischenräumen (34) Luftdurchtrittsöffnungen (38) aufweist.

5. Spundstopfen (10) nach einem der vorangehenden Ansprüche, **dadurch gekennzeichnet,**
**dass** die Schwallscheibe (32) einen äußeren Stützrand (43) zur Abstützung gegen einen im Ventilgehäuse (15) ausgebildeten Stützabsatz (44) aufweist.

6. Spundstopfen (10) nach einem der vorangehenden Ansprüche,
**dadurch gekennzeichnet,**
**dass** eine einem Spundstopfenunterrand (25) benachbarte Unterseite (45) der Befestigungsscheibe (26) gegenüber dem Spundstopfenunterrand (25) zurückversetzt oder in derselben Horizontalebene wie der Spundstopfenunterrand (25) angeordnet ist.

## Claims

1. A bung plug (10) having an integrated pressure compensation means for arrangement in a container lid of a liquid container, the bung plug (1) having a valve housing (15) below a plug depression (12), the valve housing (15) being provided with air passage openings (38, 39, 40) and having a receiving pin (16) arranged centrically in the valve housing (15) for arranging a valve diaphragm (17) whose diaphragm hub (18) is arranged on the receiving pin (16), a radially outward ring edge (19) of the valve diaphragm (17) being in contact with a ring shoulder (20) of the valve housing (15), the diaphragm hub (18) being arranged between a depression bottom (14) of the plug depression (12) and a lid hub (22) of a surge lid (21) arranged on the receiving pin (16) and provided with air passage openings (36), a surge disk (32) being provided between the surge lid (21) and the valve diaphragm (17),
**characterized in that**
the surge disk (32) and the surge lid (21) are realized as a unit and the surge lid (21) has a mounting disk (26) arranged at an axial distance (a) from the surge disk (32) for mounting in the valve housing (15), said mounting disk (26) having an outer mounting edge (27) for forming an engagement connection with a mounting seat (31) arranged at an inner side (29) of a housing wall (30) of the valve housing (15).

2. The bung plug (10) according to claim 1,
**characterized in that**
the mounting disk (26) and the surge disk (32) of the surge lid (21) are formed contiguously in one piece.

3. The bung plug (10) according to claim 1 or 2,
**characterized in that**
the mounting edge is realized as a locking ring (27) and the mounting seat is realized as a locking groove (31).

4. The bung plug (10) according to any one of the preceding claims,
**characterized in that**
the surge lid (21) has spacer ribs (33) for realizing the axial distance (a) between the mounting disk (26) and the surge disk (32), and the housing wall (30) of the valve housing (15) has air passage openings (38) radially adjacent to rib spaces (34).

5. The bung plug (10) according to any one of the preceding claims,
**characterized in that**
the surge disk (32) has an outer support edge (43) for supporting the surge disk against a support shoulder (44) formed in the valve housing (15).

6. The bung plug (10) according to any one of the preceding claims,
**characterized in that**
an underside (45) of the mounting disk (26) adjacent to the lower edge (25) of the bung plug is recessed from the lower edge (25) of the bung plug or is arranged in the same horizontal plane as the lower edge (25) of the bung plug.

## Revendications

1. Bouchon de bonde (10) comprenant un moyen de compensation de pression intégré pour être disposé dans un couvercle d'un conteneur de liquide, le bouchon de bonde (1) ayant un corps de vanne (15) au-dessous d'un creux de bouchon (12), le corps de vanne (15) étant muni de trous de passage d'air (38, 39, 40) et ayant un tourillon de réception (16) disposé de manière centrique dans le corps de vanne (15) pour la disposition d'une membrane de vanne (17) dont le moyeu de membrane (18) est disposé sur le tourillon de réception (16), un bord (19) annulaire radialement extérieure de la membrane de vanne (17) étant en contact avec un épaulement annulaire (20) du corps de vanne (15), le moyeu de membrane (18) étant disposée entre un fond (14) du creux de bouchon (12) et un moyeu de couvercle (22) d'un couvercle brise-flot (21) disposé sur le tourillon de réception (16) et muni de trous de passage d'air (36), un disque brise-flot (32) étant disposé entre le couvercle brise-flot (21) et la membrane de vanne (17),
**caractérisé en ce que**
le disque brise-flot (32) et le couvercle brise-flot (21) sont réalisés sous la forme d'une unité et le couvercle brise-flot (21) a un disque de fixation (26) pour la fixation dans le corps de vanne (15), le disque de fixation (26) étant disposé à une distance axiale (a) par rapport au disque brise-flot (32) et ayant un bord de fixation (27) extérieur pour former une liaison d'engrènement avec un logement de fixation (31) disposé sur un côté intérieur (29) d'une paroi (30) du corps de vanne (15).

2. Bouchon de bonde (10) selon la revendication 1,
**caractérisé en ce que**
le disque de fixation (26) et le disque brise-flot (32) du couvercle brise-flot (21) sont liés d'un seul tenant.

3. Bouchon de bonde (10) selon la revendication 1 ou 2,
**caractérisé en ce que**
le bord de fixation est réalisé comme bague d'encliquetage (27) et le logement de fixation est réalisé comme rainure d'encliquetage (31).

4. Bouchon de bonde (10) selon l'une quelconque des revendications précédentes,
**caractérisé en ce que**
le couvercle brise-flot (21) a des traverses d'entretoise (33) pour réaliser la distance axiale (a) entre le disque de fixation (26) et le disque brise-flot (32), et la paroi (30) du corps de vanne (15) a des trous de passage d'air (38) radialement adjacent à des espaces (34) entre les traverses d'entretoise (33).

5. Bouchon de bonde (10) selon l'une quelconque des revendications précédentes,
**caractérisé en ce que**
le disque brise-flot (32) a un bord d'appui extérieur (43) pour appuyer le disque brise-flot sur un épaulement d'appui (44) formé dans le corps de vanne (15).

6. Bouchon de bonde (10) selon l'une quelconque des revendications précédentes,
**caractérisé en ce**
**qu'**une face inférieure (45) du disque de fixation (26) adjacente au bord inférieur (25) du bouchon de bonde est en retrait par rapport au bord inférieur (25) du bouchon de bonde ou est disposée dans le même plan horizontal que le bord inférieur (25) du bouchon de bonde.
